(19) Europäisches Patentamt
European Patent Office
Office européen des brevets

(11) **EP 2 738 514 A1**

(12) **EUROPEAN PATENT APPLICATION**

(43) Date of publication:
**04.06.2014 Bulletin 2014/23**

(51) Int Cl.:
***G01B 9/02*** *(2006.01)*

(21) Application number: **13195111.3**

(22) Date of filing: **29.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.11.2012 JP 2012263675**

(71) Applicant: **CANON KABUSHIKI KAISHA**
**Ohta-ku**
**Tokyo 146-8501 (JP)**

(72) Inventor: **Okuda, Hiroshi**
**Ohta-ku Tokyo (JP)**

(74) Representative: **Walker, Philip Martin**
**Canon Europe Ltd**
**European Patent Department**
**3 The Square**
**Stockley Park**
**Uxbridge, Middlesex UB11 1ET (GB)**

(54) **Error reducing method in heterodyne interferometry**

(57)  A shape of a surface (111a) is measured using a measurement signal ($I_{sig}(x, y, t)$) based on an interfering light of reference light of first light reflected by a reference surface (108a) and test light of second light reflected by the surface to be measured. The method includes detecting the measurement signal and a reference signal ($I_{ref}(t)$) based on interfering light of the first light not incident on the reference surface and the second light not incident on the surface to be measured, obtaining a sine multiplied signal and a cosine multiplied signal of the measurement signal, correcting the sine multiplied signal and the cosine multiplied signal by a sine signal and a cosine signal of the error component; obtaining a phase by calculating an arctangent of the corrected sine multiplied signal and the corrected cosine multiplied signal and obtaining the shape based on the phase.

FIG. 8

**Description**

BACKGROUND OF THE INVENTION

Field of the Invention

The present invention relates to a measurement method and measurement apparatus using an interferometer.

Description of the Related Art

When a shape of a surface to be measured and a distance to the surface are to be measured using an interferometer, periodic errors are periodically generated in an optical path length due to polarized light components which are not normally separated into P- and S-polarized light components, and stray light generated by an interference optical system, thus often impairing the measurement precision. Japanese Patent Laid-Open No. 2008-510170 discloses a method of correcting periodic errors of a conventional heterodyne interferometer. With this related art, for example, an AD converter of 120 MHz detects a reference signal and a measurement signal from a surface to be measured, and DFT (Discrete Fourier Transform) calculations are made at every 10 MHz. Then, in the related art, a phase is calculated by a Cordic (Coordinate Rotation Digital Computer) calculation, thereby measuring a position or displacement of the surface. With the related art, periodic errors depending on a Doppler shift are detected from the DFT output, and are subtracted from the calculated phase, thus correcting the periodic errors.

The related art suffers two problems. The first problem is that of the calculation scale. As is generally known, the DFT requires huge calculation volumes. In order to make such huge calculations, large-scale parallel calculations including ultra-high speed multiplications and additions are required using a very high-speed DSP (Digital Signal Processor) or FPGA (Field Programmable Gate Array). For this reason, a high-cost digital signal processing unit having a large heat generation amount and heavy calculation load is required.

The second problem is that posed by a measurement with a small light amount when a shape of a rough surface is to be measured. When the shape of a surface to be measured is measured, if the surface is a rough surface, the reflectance of test light becomes small due to scattering of light and the like. In this case, a measurement error is generated by error signal components with respect to a heterodyne main signal such as very small stray light which does not pose any problem when the surface is a mirror surface, electromagnetic noise of a high-frequency signal, and periodic intensity modulation components of a light source. As a feature of these error signal components, their frequencies do not vary even when the main signal Doppler-shifts due to a change in optical path length between the surface and a reference surface.

SUMMARY OF THE INVENTION

Hence, the present invention provides a measurement method which uses an interferometer that can attain low-cost and high-precision measurements.

The present invention in a first aspect provides a measurement method as specified in any of accompanying claims 1 to 8.

The present invention in a second aspect provides a measurement apparatus as specified in accompanying claim 9.

Further features of the present invention will become apparent from the following description of embodiments with reference to the attached drawings.

BRIEF DESCRIPTION OF THE DRAWINGS

Fig. 1 is a view showing a measurement apparatus according to the present invention;
Fig. 2 is a block diagram showing a phase calculation circuit;
Fig. 3 is a circuit diagram of a CIC filter;
Fig. 4 is a graph showing the frequency characteristics of the CIC filter;
Fig. 5 is a view for explaining the influence of stray light;
Fig. 6 is a view for explaining details of a light source;
Fig. 7 is a graph showing the relationship between the frequency characteristics of the CIC filter and the frequencies of error signals;
Fig. 8 is a block diagram showing a phase calculation circuit to which an error signal correction function is added; and

Fig. 9 is a view for explaining a case in which test light is shielded.

DESCRIPTION OF THE EMBODIMENTS

Embodiments of the present invention will be described in detail hereinafter with reference to the accompanying drawings. The following description will be given in an order of the arrangement of a measurement apparatus, a calculation method of a length measurement value, generation factors of error signals, and a correction method of error signals. The calculation method of a length measurement value to be described second reduces the calculation scale to realize a low-cost measurement method. The correction method of error signals to be described last realizes a high-precision measurement method by correcting error signal components which are error factors in case of a small light amount and do not depend on an optical path length.

[Arrangement of Measurement Apparatus]

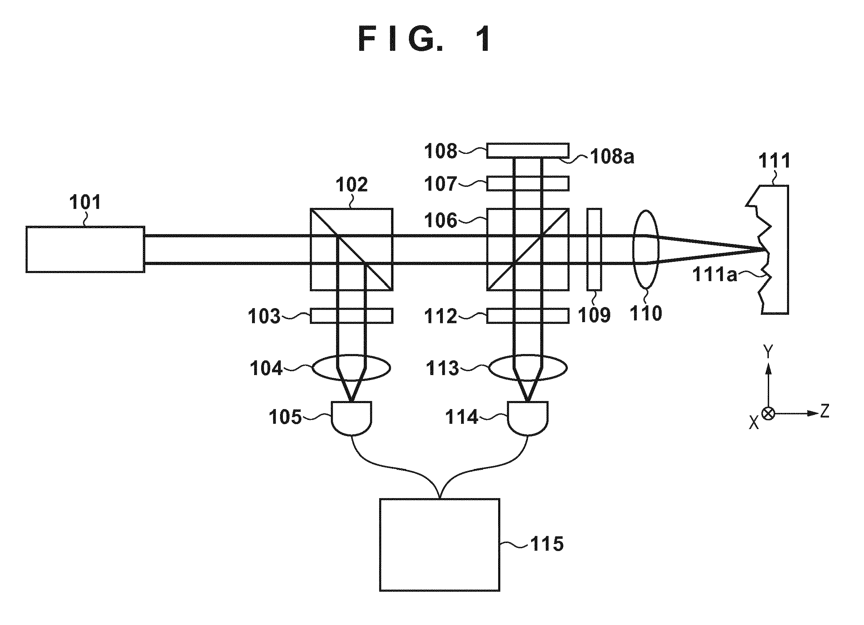

Fig. 1 shows a measurement apparatus according to the present invention. This measurement apparatus using an interferometer measures a shape of an object 111 to be measured. The object 111 assumes a rough surface. In this embodiment, a phase is calculated using a heterodyne method. A light source 101 is a heterodyne light source, and emits S-polarized light (first light) and P-polarized light (second light).
Let $f_S$ be a frequency of the first light as the S-polarized light and $f_P$ be a frequency of the second light as the P-polarized light. The heterodyne light source is a generation factor of error signals, and details will be described later. The S-polarized light and P-polarized light are incident on a non-polarization beam splitter 102, some light components are reflected by the non-polarization beam splitter 102, and the remaining light components are transmitted through the non-polarization beam splitter 102.
The S-polarized light and P-polarized light reflected by the non-polarization beam splitter 102 are transmitted through an analyzer 103, a polarization axis of which is positioned at an angle of 45°. The S-polarized light and P-polarized light, which have been transmitted through the analyzer 103, are incident on a condenser lens 104, and interfering light of the S-polarized light and P-polarized light is received by a detector (first detector) 105. A signal generated based on the interfering light received by the detector 105 will be referred to as a reference signal hereinafter. On the other hand, the S-polarized light and P-polarized light, which have been transmitted through the non-polarization beam splitter 102, are incident on a polarization beam splitter 106. The S-polarized light is reflected by the polarization beam splitter 106, and the P-polarized light is transmitted through the polarization beam splitter 106. The S-polarized light reflected by the polarization beam splitter 106 is transmitted through a λ/4 wave plate 107 to be converted into circular polarized light. The circular polarized light is reflected by a surface (reference surface) 108a of a reference mirror 108, and is transmitted through the λ/4 wave plate 107 again so as to be converted into P-polarized light. Then, this P-polarized light is incident again on the polarization beam splitter 106. Since the light which is incident again on the polarization beam splitter 106 is P-polarized light, it is transmitted through the polarization beam splitter 106. The light reflected by the reference surface will be referred to as reference light hereinafter.
On the other hand, the P-polarized light transmitted through the polarization beam splitter 106 is transmitted through a λ/4 wave plate 109 to be converted into circular polarized light. The beam spot size of the circular polarized light is condensed by a condenser lens 110, and the circular polarized light is reflected by a surface (surface to be measured) 111a of the object 111, which is positioned in the vicinity of a beam spot position. The beam spot size of the light (test light) reflected by the surface 111a is expanded, and that light is converted into parallel light by the condenser lens 110. The parallel light is transmitted through the λ/4 wave plate 109 again to be converted into S-polarized light, which is incident again on the polarization beam splitter 106. Since the light, which is incident again on the polarization beam splitter 106, is S-polarized light, it is reflected by the polarization beam splitter 106. The reference light and test light are mixed by the polarization beam splitter 106, and the mixed light is transmitted through an analyzer 112, a polarization axis of which is positioned at an angle of 45°.
The light transmitted through the analyzer 112 is incident on a condenser lens 113, and is received by a detector (second detector) 114. A signal based on interfering light received by the detector 114 will be referred to as a measurement signal hereinafter. The reference signal and measurement signal received by the detectors 105 and 114 are sent to a processing unit 115, which calculates a phase of a point on the object 111 irradiated with a beam. By moving the object 111 in an X-Y direction, and calculating phases of respective points, the processing unit 115 calculates a shape or position (length measurement value) of the object 111.

[Calculation Method of Length Measurement Value]

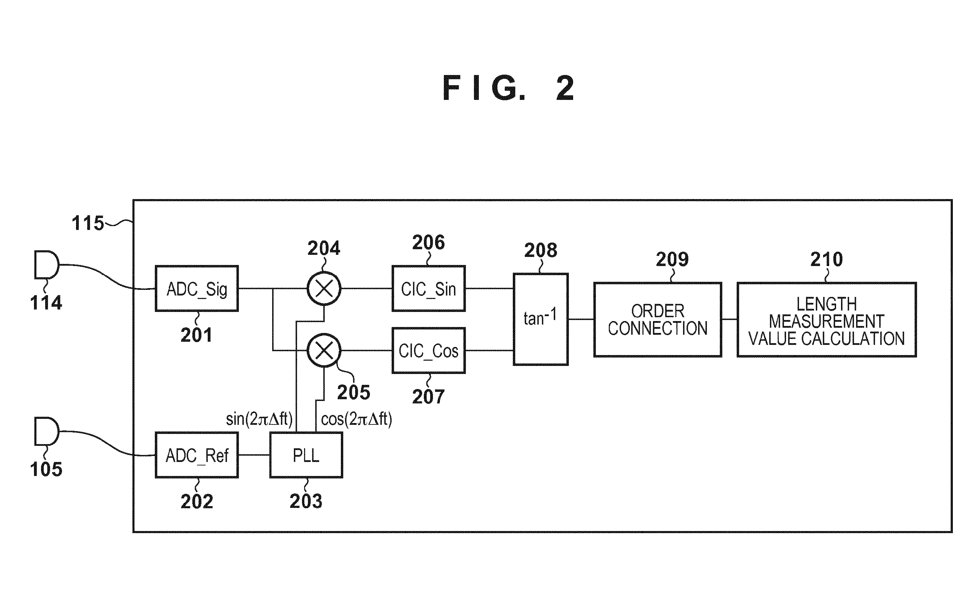

Fig. 2 shows a phase calculation circuit of the measurement apparatus. Fig. 2 shows details of the detectors 105 and 114 and the processing unit 115. Signals obtained when light beams are received by the detectors 105 and 114 will be described first. Letting $\phi(x, y, t)$ be a phase corresponding to a position of a point $(x, y)$ on the object 111 irradiated with a beam at certain time t, a reference signal $I_{ref}(t)$ and measurement signal $I_{sig}(x, y, t)$ are respectively given by:

$$I_{ref}(t) = C_0^{ref} + C_1^{ref}\cos(2\pi\Delta ft) \qquad \ldots(1)$$

$$I_{sig}(x, y, t) = C_0^{sig}(x, y, t) + C_1^{sig}(x, y,$$

$$t)\cos(2\pi\Delta ft - \phi(x, y, t)) \qquad \ldots(2)$$

The phase $\phi(x, y, t)$ is a phase difference between the test light and reference light at the point $(x, y)$ on the object 111. Note that $\Delta f$ is a difference expressed by $\Delta f = f_S - f_P$, and is generally called a beat frequency.

In equations (1) and (2), $C_0^{ref}$, $C_1^{ref}$, $C_0^{sig}(x, y, t)$, and $C_1^{sig}(x, y, t)$ are proportional coefficients. The reason why the proportional coefficients $C_0^{sig}(x, y, t)$ and $C_1^{sig}(x, y, t)$ of the measurement signal become functions of $(x, y, t)$ is that the point $(x, y)$ on the object 111 irradiated with a beam changes depending on time t, and a light amount of reflected light returning from the object 111 changes accordingly.

The reference signal $I_{ref}(t)$ given by equation (1) is obtained when light is received by the detector 105, the measurement signal $I_{sig}(x, y, t)$ given by equation (2) is obtained when light is received by the detector 114, and both of these signals are sent to the processing unit 115. Then, the reference signal $I_{ref}(t)$ and measurement signal $I_{sig}(x, y, t)$ are converted into digital signals using analog-to-digital converters (ADCs) 201 and 202. These digital signals will be referred to as a digital reference signal and digital measurement signal hereinafter. For example, when the beat frequency $\Delta f$ is 20 MHz, a sampling frequency of each ADC requires about 100 MHz.

A phase-locked loop (PLL) 203 as a phase synchronization unit generates a sine signal expressed by $\sin(2\pi\Delta ft)$ and a cosine signal expressed by $\cos(2\pi\Delta ft)$, which are synchronized with the digital reference signal. These two signals will be referred to as a phase-synchronization sine signal and phase-synchronization cosine signal, respectively. A PLL method is generally prevalent, and phase-synchronization sine values and phase-synchronization cosine values may be stored in advance in a memory as a table to have the beat frequency $\Delta f$ as a fixed value. For example, when a signal amplitude range is 16 bits, and a time resolution is 12 bits, a required memory size is 65.536 kbits, and can be easily realized by using an internal memory of an FPGA or DSP.

Mixers 204 and 205 respectively multiply the phase-synchronization sine signal and phase-synchronization cosine signal generated by the PLL 203 to generate signals. The mixer 204 generates a digital signal expressed by:

$$(1/2)C_1^{sig}(x, y, t)\sin(\phi(x, y, t)) + C_0^{sig}(x, y,$$

$$t)\sin(2\pi\Delta ft) + (1/2)C_1^{sig}(x, y, t)\sin(4\pi\Delta ft - \phi(x, y, t))$$

$$\ldots(3)$$

This signal will be referred to as a sine multiplied signal hereinafter.

On the other hand, the mixer 205 generates a digital signal expressed by:

$$(1/2)C_1^{sig}(x, y, t)\cos(\phi(x, y, t)) + C_0^{sig}(x, y,$$

$$t)\cos(2\pi\Delta ft) + (1/2)C_1^{sig}(x, y, t)\cos(4\pi\Delta ft - \phi(x, y, t))$$

$$\ldots(4)$$

This signal will be referred to as a cosine multiplied signal hereinafter.

In this case, when a Doppler shift $f_{Dop}(x, y, t)$ is used, the phase $\phi(x, y, t)$ is given by:

$$\frac{d}{dt}\left(\frac{\varphi(x,y,t)}{2\pi}\right) = f_{Dop}(x,y,t) \qquad \ldots (5)$$

For the sake of simplicity, when the Doppler shift assumes a constant value, that is, when the object 111 moves at a constant speed, equation (5) can be rewritten as:

$$\phi(x, y, t) = 2\pi f_{Dop}t \qquad \ldots (6)$$

Therefore, in expressions (3) and (4), the first term is a frequency $f_{Dop}$ component, the second term is a frequency $\Delta f$ component, and the third term is a frequency ($2\Delta f$ - $f_{Dop}$) component. Hence, in order to calculate the phase $\phi(x, y, t)$, high-order harmonic components of the second and third term components have to be removed. High-order harmonic components of the sine multiplied signal and cosine multiplied signal generated by the mixers 204 and 205 are removed by Cascaded Integrator-Comb (CIC) filters 206 and 207.

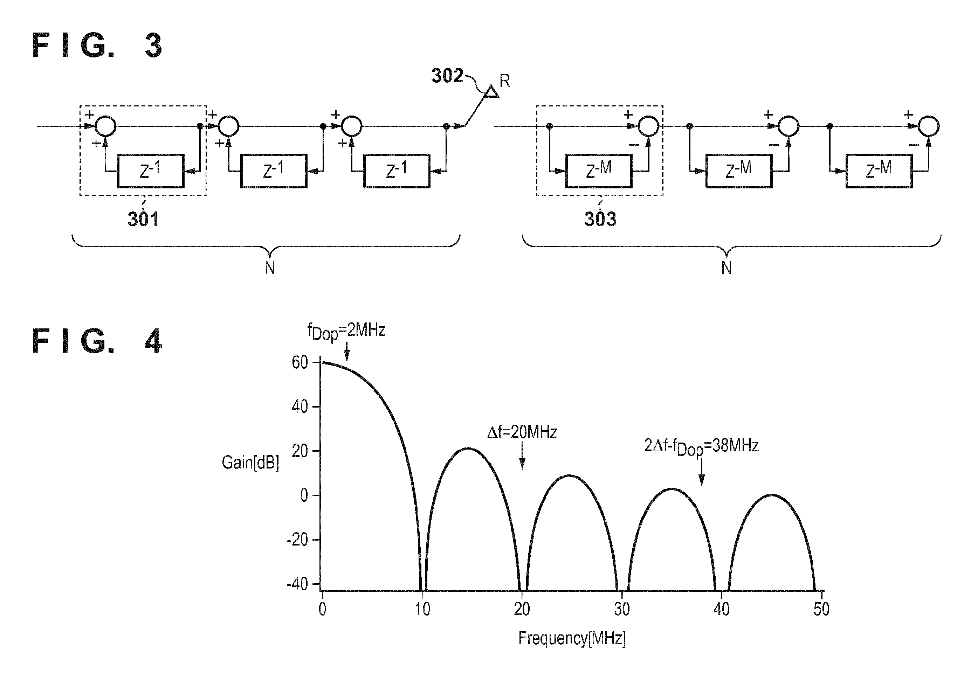

Fig. 3 is a circuit diagram of the CIC filter. The CIC filter is expressed using three parameters, that is, the number N of integrator/differentiator stages, a decimation ratio R, and a delay difference M. The circuit diagram of the CIC filter will be described below with reference to Fig. 3. An integrator 301 adds an input digital signal to an immediately preceding digital value, and this addition is repeated by times as many as the number N of integrator/differentiator stages. After that, a decimation filter 302 converts a sampling frequency to 1/R as a reciprocal of the decimation ratio. For example, when the sampling frequency of the integrator 301 is 100 MHz and the decimation ratio R = 10, a calculation after the decimation filter 302 is 10 MHz. With this decimation, since calculations after the CIC filter are made at a frequency 1/R of the sampling frequency, the calculation load on digital signal processing can be greatly reduced. After the signal passes through the decimation filter 302, a differentiator 303 subtracts a digital value M values before as a delay difference from the signal, and this subtraction is repeated by times as many as the N stages. The circuit diagram of the CIC filter has been explained.

Frequency characteristics H(f) of the CIC filter with respect to a frequency f are expressed by:

$$H(f) = \left(\sum_{k=0}^{RM-1} \exp\left(-i2\pi k \frac{f}{f_{sm}}\right)\right)^N \qquad \ldots (7)$$

where $f_{sm}$ is a sampling frequency of the ADC, and R, M, and N are parameters unique to the CIC filter, which determines the shape of the filter described above. Fig. 4 shows the frequency characteristics H(f) of the CIC filter when $f_{sm}$ = 100 MHz, R = 10, M = 1, and N = 3. In Fig. 4, the ordinate plots the gain [dB], and the abscissa plots the frequency [Hz]. Arrows in Fig. 4 indicate frequency components of the first to third terms of expressions (3) and (4) when the beat frequency $\Delta f$ = 20 MHz, and the Doppler shift $f_{Dop}$ = 2 MHz. The second and third term components are sufficiently reduced with respect to the first term component in expressions (3) and (4).

Therefore, the digital signals, which have passed through the CIC filters 206 and 207, are respectively expressed by:

$$\{G_{CIC}(f_{Dop}(x, y, t))/2\}C_1{}^{sig}(x, y, t)\sin(\phi(x, y, t))$$

$$\ldots (8)$$

$$\{G_{CIC}(f_{Dop}(x, y, t))/2\}C_1{}^{sig}(x, y, t)\cos(\phi(x, y, t))$$

$$\ldots (9)$$

where $G_{CIC}(f_{Dop}(x, y, t))$ corresponds to the gain of the CIC filter at $f = f_{Dop}(x, y, t)$.

An arctangent calculator 208 calculates an arctangent of the two input signals. Therefore, using expressions (8) and (9), the following calculation is made. This calculation is described by:

$$\tan^{-1}[\{G_{CIC}(f_{Dop}(x, y, t))/2\}C_1^{sig}(x, y, t)\sin(\phi(x, y, t))/\{G_{CIC}(f_{Dop}(x, y, t))/2\}C_1^{sig}(x, y, t)\cos(\phi(x, y, t))]$$

$$= \phi(x, y, t) \qquad\qquad ...(10)$$

This value is input to an order connection calculator 209 to connect orders, and a length measurement value calculator 210 finally converts the output from the calculator 209 into a length measurement value. Conversion into a length measurement value is given by:

$$z(x, y, t) = (\lambda_{sig}/2) \times (\phi(x, y, t)/2\pi) \qquad ...(11)$$

where $\lambda_{sig}$ is the wavelength of the test light.

$z(x, y, t)$ is a length measurement value of the point (x, y) irradiated with a beam on the object 111, which corresponds to an optical path length difference at time t. "2" of the denominator of $\lambda_{sig}$ is a coefficient caused by the test light which reciprocates between the measurement apparatus and object 111. As described above, the length measurement value $z(x, y, t)$ is measured while changing the object 111 in the X-Y direction in Fig. 1 with respect to the measurement apparatus, thereby calculating the shape of the object 111. Since this method uses the PLL method which can be configured by the sufficiently small memory capacity, and the CIC filters which can reduce the calculation frequency by decimation, the length measurement value calculations which reduce the calculation scale can be attained.

[Generation Factor of Error Signal]

As a feature of errors as the problem of the present invention, their frequencies do not vary even when a main signal Doppler-shifts due to a change in optical path length. In this case, three types of generation factors will be exemplified, the types of generation factors will be explained first, and length measurement errors caused by these factors will then be explained. The three types of generation factors to be exemplified below include very small stray light which does not pose any problem when a surface to be measured is a mirror surface, electromagnetic noise of a high-frequency signal, and periodic intensity modulation components of a light source.

(Error Generation Factor: Very Small Stray Light)

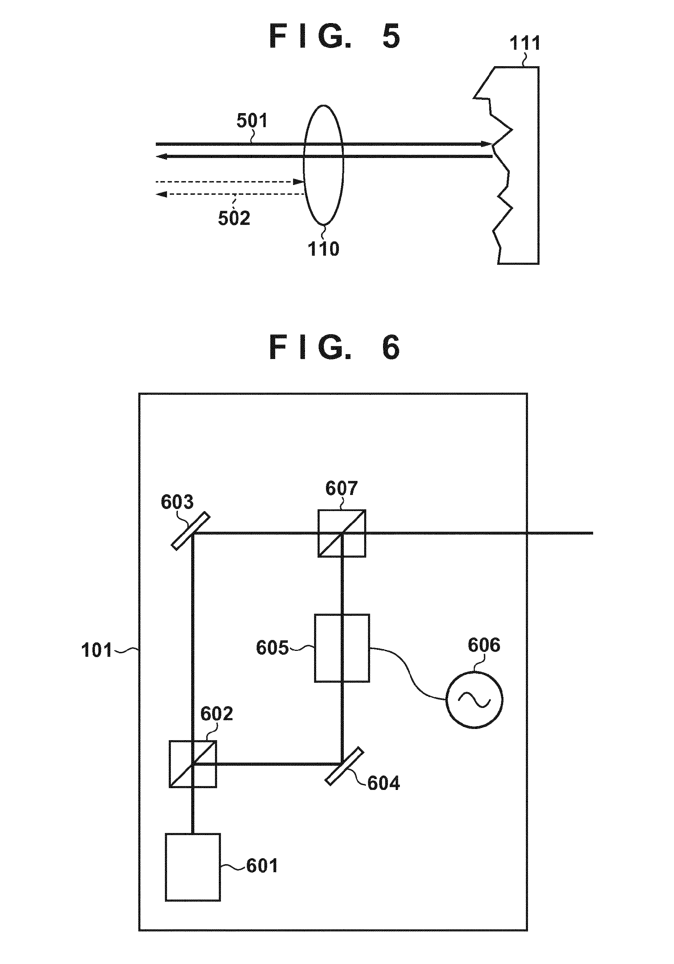

A case will be described below with reference to Fig. 5 wherein an error generation factor is very small stray light (scattered light) which does not pose any problem when a surface to be measured is a mirror surface. Fig. 5 is an explanatory view of stray light, which is generated when a beam is reflected by the condenser lens 110, and is especially hard to be removed when a rough surface is to be measured. In Fig. 5, a beam, which is transmitted through the condenser lens 110, is reflected by the object 111, and is transmitted through the condenser lens 110 again, is indicated by solid line arrows 501. Also, a beam, which is reflected by the condenser lens 110 and does not reach the object 111, is indicated by dotted line arrows 502. This beam 502 is that which becomes stray light. In general, a condenser lens is AR (AntiReflection)-coated, and a reflectance of a beam is suppressed to be very small. However, when a surface to be measured is a rough surface, a light amount of reflected light, which is reflected by the object 111 and returns to the condenser lens 110, becomes very small. As a result, the influence of the stray light beam 502 becomes relatively large with respect to the beam 501 as a main signal, thus causing errors. The stray light beam 502 is mixed with the reference light reflected by the reference mirror 108 by the polarization beam splitter 106, and consequently has a signal of the beat frequency Δf. The stray light beam 502 configures first error components having the beat frequency Δf. A main signal formed by the beam 501 reflected by the object 111 includes a Doppler shift, while a signal formed by the stray light beam 502 has a fixed frequency, that is, the beat frequency Δf, and its amplitude and phase are fixed except for temporal changes. That is, the stray light beam 502 does not depend on a change in optical path length of the main signal.

(Error Generation Factor: Electromagnetic Noise of High-frequency Signal)

A case will be described below with reference to Fig. 6 wherein an error generation factor is electromagnetic noise of a high-frequency signal. Fig. 6 is an explanatory view of details of the light source 101. As described above, the light source 101 is a heterodyne light source, and emits the S-polarized light of the frequency $f_S$ and P-polarized light of the frequency $f_P$. In this case, a generation mechanism of the S-polarized light of the frequency $f_S$ and P-polarized light of the frequency $f_P$ will be described first, and electromagnetic noise of a high-frequency signal will then be described. In the light source 101, a light source element 601 is positioned. The light source element 601 is an element which generates light of a single frequency, and indicates a semiconductor laser or gas laser. Light emitted from the light source element 601 is separated into S-polarized light and P-polarized light by a polarization beam splitter 602. The P-polarized light transmitted through the polarization beam splitter 602 is reflected by a mirror 603, and is incident on a polarization beam splitter 607. The frequency of this P-polarized light is $f_P$. On the other hand, the S-polarized light reflected by the polarization beam splitter 602 is reflected by a mirror 604, is transmitted through an acoustic optical modulator (AOM) 605, and is then incident on the polarization beam splitter 607. The AOM 605 is an optical element which generates diffracted light by modulating the frequency of incident light by a frequency of an ultrasonic wave when the ultrasonic wave propagates through a crystal in the AOM by an oscillator 606 having an oscillation frequency $\Delta f$ and serves as a pseudo diffraction grating. Therefore, light transmitted through the AOM 605 becomes light of the frequency $f_S$, which is modulated by $\Delta f$.

The heterodyne light source uses the oscillator 606 having the oscillation frequency $\Delta f$, as described above, and electromagnetic noise of the frequency $\Delta f$ is radiated from the oscillator 606 albeit only slightly. This electromagnetic noise is mixed as an error signal of the frequency $\Delta f$ via the detector 105 or 114 or an electric cable. Especially, when the light amount of reflected light, which is reflected by the object 111 and returns to the condenser lens 110, becomes very small, this influence is not negligible. In addition to the influence of the oscillator 606 of the AOM, when a high-frequency oscillator is used to stabilize the oscillation frequency of the light source element 601 or to drive the processing unit 115 by a clock frequency of an FPGA or the like, similar electromagnetic noise is generated. A frequency in such case is not limited to $\Delta f$, and is an oscillation frequency used in each case. These frequencies do not depend on the optical path length difference like in the case of stray light, and do not almost suffer temporal variations. Electromagnetic noise of a high-frequency signal may configure both of first error components having the beat frequency $\Delta f$, and second error components having a frequency different from the beat frequency $\Delta f$.

(Error Generation Factor: Periodic Intensity Modulation Component of Light Source)

A case will be described below with reference to Fig. 6 again wherein an error generation factor includes periodic intensity modulation components of the light source. Only a frequency of light transmitted through the AOM is to be modulated in nature, but an intensity is also slightly modulated in practice, and intensity modulation including not only $\Delta f$ but also high-order harmonic components $2\Delta$, $3\Delta f$,... of $\Delta f$ may often be made. Since the S-polarized light transmitted through the AOM is reference light, it does not depend on the optical path length difference like in the aforementioned two types of factors, and its frequency, amplitude, and phase do not suffer any temporal variations. The periodic intensity modulation components of the light source configure second error components having frequencies different from the beat frequency $\Delta f$.

How the aforementioned three types of errors become length measurement errors will be explained below. The three types of errors deform the measurement signal $I_{sig}(x, y, t)$ from the signal given by equation (2) to that given by:

$$I_{sig}(x, y, t) = C_0^{sig}(x, y, t) + C_1^{sig}(x, y, t)\cos(2\pi\Delta ft - \phi(x, y, t)) + C_2^{sig}\cos(2\pi\Delta ft - \phi_2) +$$
$$C_3^{sig}\cos(2\pi\Delta gt - \phi_3) + C_4^{sig}\cos(2\pi\Delta ht - \phi_4) \qquad ...(12)$$

The aforementioned three types of errors are expressed as a signal having the fixed frequency $\Delta f$ or those having $\Delta g$ and $\Delta h$ other than $\Delta f$. Therefore, first error components having components of the frequency $\Delta f$ are expressed as a third term, and second error components having components of frequencies $\Delta g$, $\Delta h$,... other than $\Delta f$ are expressed as fourth and subsequent terms. For the sake of simplicity, assume that a frequency other than $\Delta f$ is only $\Delta g$ in the following description.

In the mixers 204 and 205, expressions (3) and (4) are respectively modified to those respectively given by:

$(1/2)C_1{}^{sig}(x, y, t)\sin(\phi(x, y, t)) + C_0{}^{sig}(x, y, t)\sin(2\pi\Delta ft) + (1/2)C_1{}^{sig}(x, y, t)\sin(4\pi\Delta ft - \phi(x, y, t)) + (1/2)C_2{}^{sig}\sin(\phi_2) + (1/2)C_2{}^{sig}\sin(4\pi\Delta ft - \phi_2) + (1/2)C_3{}^{sig}\sin(2\pi(\Delta f - \Delta g)t + \phi_3) + (1/2)C_3{}^{sig}\sin(4\pi(\Delta f + \Delta g)t - \phi_3)$ ...(13)

$(1/2)C_1{}^{sig}(x, y, t)\cos(\phi(x, y, t)) + C_0{}^{sig}(x, y, t)\cos(2\pi\Delta ft) + (1/2)C_1{}^{sig}(x, y, t)\cos(4\pi\Delta ft - \phi(x, y, t)) + (1/2)C_2{}^{sig}\cos(\phi_2) + (1/2)C_2{}^{sig}\cos(4\pi\Delta ft - \phi_2) + (1/2)C_3{}^{sig}\cos(2\pi(\Delta f - \Delta g)t + \phi_3) + (1/2)C_3{}^{sig}\cos(4\pi(\Delta f + \Delta g)t - \phi_3)$ ...(14)

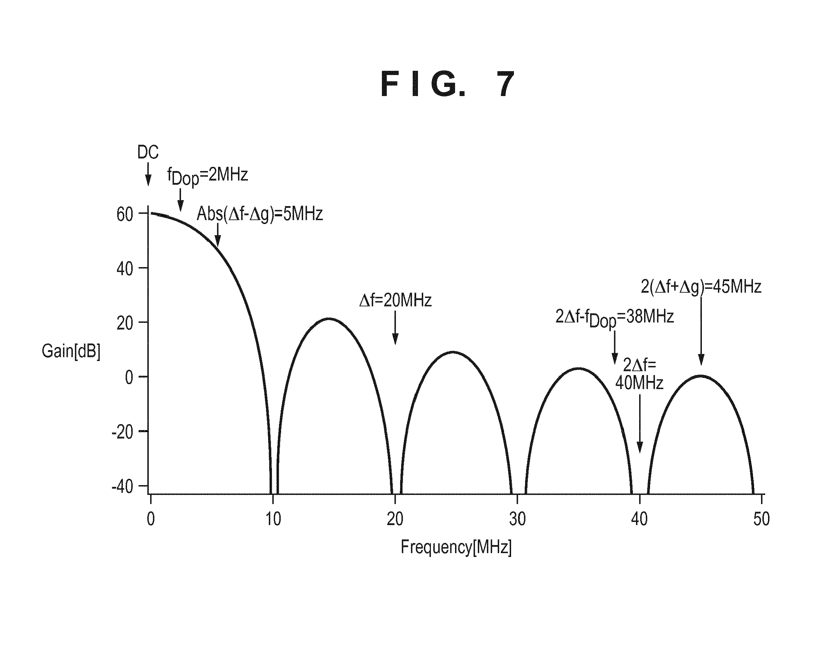

These signals are attenuated after they are transmitted through the CIC filters 206 and 207. Fig. 7 shows frequency components when the beat frequency $\Delta f$ = 20 MHz, Doppler shift $f_{Dop}$ = 2 MHz, and another high-frequency component $\Delta g$ = 25 MHz in addition to the attenuation factor in the CIC filter. In equations (11) and (12), an $f_{Dop}$ component (main signal) of the first term, a DC component of the fourth term, and an absolute value component of ($\Delta f - \Delta g$) of the sixth term are not so attenuated by the CIC filter. More specifically, expressions (13) and (14) after transmission through the CIC filter are modified to:

$(G_{CIC}(f_{Dop}(x, y, t))/2)C_1{}^{sig}(x, y, t)\sin(\phi(x, y, t)) + (G_{CIC}(0)/2)C_2{}^{sig}\sin(\phi_2) + (G_{CIC}(\Delta f - \Delta g)/2)C_3{}^{sig}\sin(2\pi(\Delta f - \Delta g)t + \phi_3)$ ...(15)

$(G_{CIC}(f_{Dop}(x, y, t))/2)C_1{}^{sig}(x, y, t)\cos(\phi(x, y, t)) + (G_{CIC}(0)/2)C_2{}^{sig}\cos(\phi_2) + (G_{CIC}(\Delta f - \Delta g)/2)C_3{}^{sig}\cos(2\pi(\Delta f - \Delta g)t + \phi_3)$ ...(16)

Therefore, equation (10) is modified like:

$$\tan^{-1}\left(\frac{\frac{G_{CIC}(f_{Dop}(x,y,t))}{2}C_1^{sig}(x,y,t)\sin(\varphi(x,y,t)) + \frac{G_{CIC}(0)}{2}C_2^{sig}\sin(\varphi_2) + \frac{G_{CIC}(\Delta f - \Delta g)}{2}C_3^{sig}\sin(2\pi(\Delta f - \Delta g)t + \varphi_3)}{\frac{G_{CIC}(f_{Dop}(x,y,t))}{2}C_1^{sig}(x,y,t)\cos(\varphi(x,y,t)) + \frac{G_{CIC}(0)}{2}C_2^{sig}\cos(\varphi_2) + \frac{G_{CIC}(\Delta f - \Delta g)}{2}C_3^{sig}\cos(2\pi(\Delta f - \Delta g)t + \varphi_3)}\right)$$

...(17)

As expressed by expression (17), the second and third terms of each of the denominator and numerator in the arctangent become errors. In the second and third terms of each of the denominator and numerator of the arctangent of expression (17), the second term is a constant which does not temporally vary, while the third term has a component of the frequency (Δf - Δg).

[Correction Method of Error Signal]

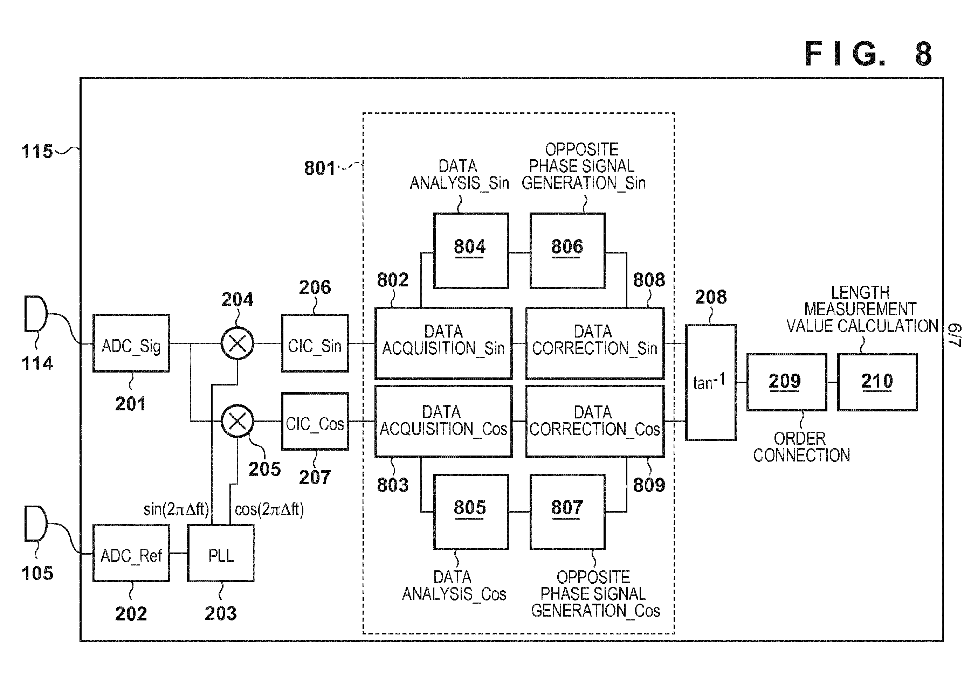

Fig. 8 shows a phase calculation circuit of the present invention, to which an error signal correction function is added. A portion 801 bounded by the dotted line is an error signal correction function portion. As a basic concept, the second and third terms in expressions (15) and (16) are errors, these errors are acquired and analyzed, sine and cosine data of a phase opposite to the error components are generated, and correction is made using the generated data.

A practical correction method will be described below. For the sake of simplicity, assume that a frequency other than Δf is only Δg in the following description. Of course, if there are a plurality of other frequency components, error components can be corrected by the same method as that to be described below. There are two methods of correcting error components, that is, a method of shielding test light, and a method of controlling a moving speed of the object 111.

(Correction Method: Method of Shielding Test Light)

The method of shielding test light will be described first. In this method, a measurement signal is acquired once in a state in which test light is shielded, and a normal measurement without shielding the test light is then executed. As described above, among the three types of generation factors of error signals, errors caused by the Δf component as the beat frequency (errors of the second terms in the denominator and numerator in the arctangent of expression (17)) are not attenuated by the CIC filter, and seriously influence the measurement result the most. The method of shielding test light is particularly effective when the influence of components of the second terms in expressions (15) and (16) are serious.

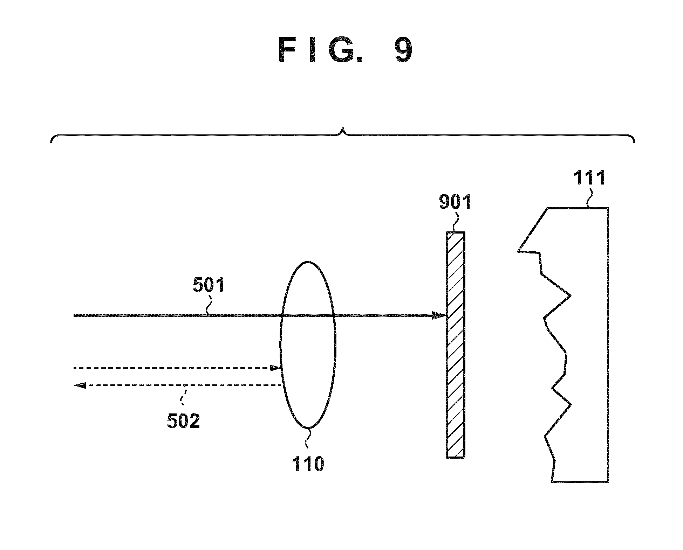

Fig. 9 is an explanatory view when test light is shielded. In Fig. 9, a member (light-shielding plate) 901, which absorbs test light, is positioned in front of the object 111. Therefore, only a stray light beam returns to the measurement apparatus side. In addition to the light-shielding plate, a member (mirror) which reflects test light so as not to return it to the measurement apparatus may be positioned. A measurement signal when test light is shielded is as follows.

$$I_{sig}(t) = C_0{}^{sig} + C_2{}^{sig}\cos(2\pi\Delta ft - \phi_2) \qquad \ldots (18)$$

In this case, $C_0{}^{sig}$ of the first term of equation (18) is a DC component of an interfering signal generated by the reference light and stray light, and the second term represents a sum of Δf component signals of the three types of generation factors of error signals. Since the interfering signal of the reference light and stray light does not temporally vary, $C_0{}^{sig}$ is a constant. In this case, assume that signals of Δg components other than the frequency Δf are sufficiently small. A correction method of the Δg components will be described in a second correction method.

The signal given by equation (18) is transmitted through the mixers 204 and 205 and the CIC filters 206 and 207 to be converted into signals respectively expressed by:

$$(G_{CIC}(0)/2)\cdot C_2{}^{sig}\sin(\phi_2) \qquad \ldots (19)$$

$$(G_{CIC}(0)/2)\cdot C_2{}^{sig}\cos(\phi_2) \qquad \ldots (20)$$

Since the first term components in equation (18) are sufficiently attenuated by the CIC filters, they do not appear in expressions (19) and (20). The signals given by expressions (19) and (20) are acquired by data acquisition units 802 and 803. These signals are sent to data analysis units 804 and 805. When errors of only the Δf components are to be corrected, the data analysis units 804 and 805 do not particularly require analysis calculations. The data analysis units 804 and 805 require analysis calculations when signals of the Δg components other than the frequency Δf are to be corrected, and such correction will be described in the second correction method. The signals of expressions (19) and (20) which have passed through the data analysis units 804 and 805 are sent to opposite phase signal generation units 806 and 807. Since the signals expressed by expressions (19) and (20) are constants, the opposite phase signal generation units 806 and 807 generate signals, the sign of which is simply inverted, and which are expressed by:

$$-(G_{CIC}(0)/2)\cdot C_2{}^{sig}\sin(\phi_2) \qquad \qquad \ldots (21)$$

$$-(G_{CIC}(0)/2)\cdot C_2{}^{sig}\cos(\phi_2) \qquad \qquad \ldots (22)$$

After the signals of expressions (21) and (22) are obtained in advance, a normal measurement without shielding test light is executed. A measurement signal at this time is given by:

$$I_{sig}(t) = C_0{}^{sig}(x, y, t) + C_1{}^{sig}(x, y, t)\cos(2\pi\Delta ft -$$

$$\phi(x, y, t)) + C_2{}^{sig}\cos(2\pi\Delta ft - \phi_2) \qquad \qquad \ldots (23)$$

Therefore, this measurement signal is transmitted through the mixers 204 and 205 and the CIC filters 206 and 207 to be converted into signals respectively expressed by:

$$(G_{CIC}(f_{Dop}(x, y, t))/2)\cdot C_1{}^{sig}(x, y, t)\sin(\phi(x, y,$$

$$t)) + (G_{CIC}(0)/2)\cdot C_2{}^{sig}\sin(\phi_2) \qquad \qquad \ldots (24)$$

$$(G_{CIC}(f_{Dop}(x, y, t))/2)\cdot C_1{}^{sig}(x, y, t)\cos(\phi(x, y,$$

$$t)) + (G_{CIC}(0)/2)\cdot C_2{}^{sig}\cos(\phi_2) \qquad \qquad \ldots (25)$$

In this normal measurement, the signals which have been transmitted through the CIC filters 206 and 207 and are expressed by expressions (24) and (25) pass through the data acquisition units 802 and 803. Then, data correction units 808 and 809 add the signals of expressions (21) and (22) to those of expressions (24) and (25). Therefore, the data correction units 808 and 809 remove error components (the second terms of expressions (24) and (25)) of the frequency $\Delta f$ components, thus allowing precise calculation of the phase $\phi(x, y, t)$ to be finally calculated.

(Correction Method: Method of Moving Object 111 to Generate Constant Doppler Shift)

The correction method of moving the object 111 so as to generate a constant Doppler shift will be described below. This correction method is effective when a signal of the $\Delta g$ component other than the frequency $\Delta f$ causes an error, as described above. Before the shape of a surface to be measured is measured by moving the object 111 in the X-Y direction, the object 111 is intentionally moved in a Z direction to generate a Doppler shift while it is fixed in the X-Y direction. When the Doppler shift is constant and is expressed by $f_{Dop}$, the measurement signal given by equation (12) including error signals is expressed by:

$$I_{sig}(t) = C_0{}^{sig}(t) + C_1{}^{sig}(t)\cos(2\pi\Delta ft - 2\pi f_{Dop}t) +$$

$$C_2{}^{sig}\cos(2\pi\Delta ft - \phi_2) + C_3{}^{sig}\cos(2\pi\Delta gt - \phi_3) \qquad \ldots (26)$$

Since the beam irradiation position $(x, y)$ is fixed, $C_0{}^{sig}$ and $C_1{}^{sig}$ are functions of the time $t$ alone. After the signal is transmitted through the CIC filters 206 and 207, those acquired by the data acquisition units 802 and 803 are respectively expressed by:

$$(G_{CIC}(f_{Dop})/2) \cdot C_1^{sig}(t) \sin(2\pi f_{Dop}t) + (G_{CIC}(0)/2) \cdot$$

$$C_2^{sig}\sin(\phi_2) + (G_{CIC}(\Delta f - \Delta g)/2)C_3^{sig}\sin(2\pi(\Delta f - \Delta g)t + \phi_3)$$

$$...(27)$$

$$(G_{CIC}(f_{Dop})/2) \cdot C_1^{sig}(t) \cos(2\pi f_{Dop}t) + (G_{CIC}(0)/2) \cdot$$

$$C_2^{sig}\cos(\phi_2) + (G_{CIC}(\Delta f - \Delta g)/2)C_3^{sig}\cos(2\pi(\Delta f - \Delta g)t + \phi_3)$$

$$...(28)$$

Note that expressions (27) and (28) do not describe any components attenuated by the CIC filters. The signals expressed by expressions (27) and (28) are sent to the data analysis units 804 and 805. The data analysis units 804 and 805 apply fast Fourier transformation and data fitting to the signals of expressions (27) and (28) to calculate the amplitude, frequency, and phase data of the second and third terms in expressions (27) and (28). More specifically, in case of the third term, the amplitude is $(G_{CIC}(\Delta f-\Delta g)/2) \times C_3^{sig}$, the frequency is $(\Delta f - \Delta g)$, and the phase is $\phi_3$. The merit of a constant Doppler shift is to precisely separate respective frequency components ($f_{Dop}$ components of the first term, DC components of the second term, and $(\Delta f - \Delta g)$ components of the third term in expressions (27) and (28)) upon application of the fast Fourier transformation and data fitting. If a Doppler shift is not constant, the $f_{Dop}$ components of the first term may spread on the frequency space, and may overlap the DC components of the second term and the $(\Delta f - \Delta g)$ components of the third term to be separated.

The signals processed by the data analysis units 804 and 805 are sent to the opposite phase signal generation units 806 and 807. The opposite phase signal generation units 806 and 807 generate, using the amplitude, frequency, and phase data of the second and third terms in expressions (27) and (28) obtained by the data analysis units 804 and 805, signals expressed by:

$$-(G_{CIC}(0)/2) \cdot C_2^{sig}\sin(\phi_2) - (G_{CIC}(\Delta f -$$

$$\Delta g)/2)C_3^{sig}\sin(2\pi(\Delta f - \Delta g)t + \phi_3) \qquad ...(29)$$

$$-(G_{CIC}(0)/2) \cdot C_2^{sig}\cos(\phi_2) - (G_{CIC}(\Delta f -$$

$$\Delta g)/2)C_3^{sig}\cos(2\pi(\Delta f - \Delta g)t + \phi_3) \qquad ...(30)$$

After the signals of expressions (29) and (30) are obtained in advance, a normal measurement is executed. At this time, the signals transmitted through the CIC filters are expressed by expressions (15) and (16), and they pass through the data acquisition unit 802 and 803. Then, the data correction units 808 and 809 add the signals of expressions (29) and (30) to those of expressions (15) and (16). Therefore, error components of the frequency $\Delta f$ and $\Delta g$ components are removed, and the phase $\phi(x, y, t)$ to be finally calculated can be calculated with high precision.

These error components need only be acquired once since they do not suffer any short-term temporal variations except for temporal changes, as described above. If temporal changes have occurred, the data can be acquired again. Since data acquisition and analysis need only be executed only once the calculation load can also be reduced. As described above, according to the present invention, the measurement method and measurement apparatus using an interferometer, which can reduce the calculation scale, can correct optical path length-independent error signals as error factors at the time of a small light amount, and can consequently assure low cost and high precision can be provided.

While the present invention has been described with reference to embodiments, it is to be understood that the invention is not limited to the disclosed embodiments. Preferred embodiments are set out in the following statements. The claims follow these statements and are labeled as such.

Statement 1. A measurement method of measuring a shape or a position of a surface (111a) to be measured using a measurement signal ($I_{sig}(x, y, t)$) based on an interfering light of reference light of first light reflected by a reference surface (108a) and test light of second light reflected by the surface to be measured by emitting the first light and the second light having different frequencies from a light source (101),

the measurement signal including an error component which does not depend on an optical path length difference between the test light and the reference light,

the measurement method characterized by comprising:

a step of detecting a reference signal ($I_{ref}(t)$) based on interfering light of the first light which is not incident on the reference surface and the second light which is not incident on the surface to be measured, and the measurement signal;

a step of obtaining a sine multiplied signal and a cosine multiplied signal of the measurement signal by multiplying the measurement signal by a sine signal and a cosine signal which are generated by a phase synchronization unit and are in synchronization with the reference signal;

a correction step of correcting the sine multiplied signal and the cosine multiplied signal by a sine signal and a cosine signal of the error component;

a step of obtaining a phase corresponding to the optical path length difference by calculating an arctangent of the corrected sine multiplied signal and the corrected cosine multiplied signal; and

a step of obtaining the shape or the position of the surface to be measured based on the phase.

Statement 2. The method according to statement 1, characterized in that the error component includes a first error component having a frequency as a difference between frequencies of the reference light and the test light, and a sine signal and a cosine signal of the first error component are obtained in advance using a signal based on interfering light of light of the second light, which is reflected by an optical element positioned in an optical path of the test light between the light source and the surface to be measured, and the reference light.

Statement 3. The method according to statement 2, characterized in that the signal is generated based on the interfering light of light reflected by the optical element and the reference light in a state in which a member which absorbs or reflects light of the second light, which is transmitted through the optical element and travels toward the surface to be measured, so as not to return to the optical element, is positioned between the optical element and the surface to be measured.

Statement 4. The method according to statement 1, characterized in that the error component includes a first error component having a frequency as a difference between frequencies of the reference light and the test light, and a second error component having a frequency different from the difference between the frequencies of the reference light and the test light, and

a sine signal and a cosine signal of the first error component and the second error component are acquired in advance by:

a step of detecting a measurement signal based on interfering light of the reference light and the test light while moving the surface to be measured to generate a Doppler shift which assumes a constant value;

a step of obtaining amplitude data, frequency data, and phase data of the first error component and the second error component by applying fast Fourier transformation or data fitting to the detected measurement signal; and

a step of obtaining the sine signal and cosine signal of the first error component and the second error component using the amplitude data, the frequency data, and the phase data.

Statement 5. The method according to any one of statements 1 to 4, characterized by further comprising a step of reducing high-order harmonic components of the sine multiplied signal and the cosine multiplied signal using a decimation filter,

wherein in the step of correcting the sine multiplied signal and the cosine multiplied signal, the sine multiplied signal and the cosine multiplied signal, the high-order harmonic components of which are reduced, are corrected.

Statement 6. The method according to statement 5, characterized in that the decimation filter includes a Cascaded Integrator-Comb.

Statement 7. The method according to any one of statements 1 to 6, characterized in that the phase synchronization unit includes a phase-locked loop.

Statement 8. The method according to statement 5, characterized in that letting $\Delta f$ be a difference between a frequency of the first light and a frequency of the second light, which are emitted from the light source and have the different frequencies, and $f_{Dop}$ be a frequency of a Doppler shift,

the high-order harmonic components include a component having a frequency $\Delta f$ and a component having a frequency ($2\Delta f - f_{Dop}$).

Statement 9. A measurement apparatus of measuring a shape or a position of a surface (111a) to be measured using a measurement signal ($I_{sig}(x, y, t)$) based on an interfering light of reference light of first light reflected by a reference surface (108a) and test light of second light reflected by the surface to be measured by emitting the first light and the second light having different frequencies from a light source (101),

the measurement signal including an error component which does not depend on an optical path length difference between the test light and the reference light,

said measurement apparatus characterized by comprising:

a first detector (105) configured to detect a reference signal ($I_{ref}$(t)) based on interfering light of the first light which is not incident on the reference surface and the second light which is not incident on the surface to be measured, and the measurement signal;

a second detector (114) configured to detect the measurement signal; and

a processing unit (115) configured to obtain the shape or the position of the surface to be measured based on the reference signal and the measurement signal,

wherein said processing unit generates a sine signal and a cosine signal, which are in synchronization with the reference signal, and obtains a sine multiplied signal and a cosine multiplied signal of the measurement signal by multiplying the measurement signal by the generated sine signal and the generated cosine signal,

said processing unit corrects the sine multiplied signal and the cosine multiplied signal by a sine signal and a cosine signal of the error component,

said processing unit obtains a phase ($\phi$(x, y, t)) corresponding to the optical path length difference by calculating an arctangent of the corrected sine multiplied signal and the corrected cosine multiplied signal, and

said processing unit obtains the shape or the position of the surface to be measured based on the phase.

**Claims**

1.  A measurement method of measuring a shape or position of a surface (111a) to be measured , using a measurement signal ($I_{sig}$(x, y, t)),
    the measurement method comprising:

    emitting a first light and a second light having different frequencies from a light source (101),
    detecting a measurement signal ($I_{sig}$(x, y, t)) based on an interfering light of reference light of the first light reflected by a reference surface (108a) and test light of the second light reflected by the surface to be measured and including an error component which does not depend on an optical path length difference between the test light and the reference light;
    detecting a reference signal ($I_{ref}$(t)) based on interfering light of a component of the first light which is not incident on the reference surface and a component of the second light which is not incident on the surface to be measured;
    obtaining a sine multiplied signal and a cosine multiplied signal of the measurement signal by multiplying the measurement signal by a sine signal and a cosine signal which are in synchronization with the reference signal;
    correcting the sine multiplied signal and the cosine multiplied signal with a sine signal and a cosine signal of the error component to obtain a corrected sine multiplied signal and a corrected cosine multiplied signal;
    obtaining a phase corresponding to an optical path length difference by calculating an arctangent of the corrected sine multiplied signal and the corrected cosine multiplied signal; and
    obtaining the shape or the position of the surface to be measured using the obtained phase.

2.  The method according to claim 1, wherein the error component includes a first error component having a frequency as a difference between frequencies of the reference light and the test light, and further comprising:

    obtaining a sine signal and a cosine signal of the first error component in advance using a signal based on interfering light of light of the second light, which is reflected by an optical element positioned in an optical path of the test light between the light source and the surface to be measured, and the reference light.

3.  The method according to claim 2, wherein the signal based on the interfering light of the second light, is generated based on the interfering light of light reflected by the optical element and the reference light in a state in which a member which absorbs or reflects light of the second light, which is transmitted through the optical element and travels toward the surface to be measured, so as not to return to the optical element, is positioned between the optical element and the surface to be measured.

4.  The method according to claim 1, wherein the error component includes a first error component having a frequency that is a difference between a frequency of the reference light and a frequency of the test light, and a second error component having a frequency different from the difference between the frequency of the reference light and frequency of the test light, and the method further comprises:

acquiring in advance a sine signal and a cosine signal of the first error component and the second error component by
detecting a measurement signal based on interfering light of the reference light and the test light while moving the surface to be measured to generate a Doppler shift which assumes a constant value,
obtaining amplitude data, frequency data, and phase data of the first error component and the second error component by applying fast Fourier transformation or data fitting to the detected measurement signal, and
obtaining the sine signal and cosine signal of the first error component and the second error component using the amplitude data, the frequency data, and the phase data.

5. The method according to any one of claims 1 to 4, further comprising reducing high-order harmonic components of the sine multiplied signal and the cosine multiplied signal using a decimation filter,
wherein correcting the sine multiplied signal and the cosine multiplied signal comprises correcting the reduced high-order harmonic components of the sine multiplied signal and the cosine multiplied signal.

6. The method according to claim 5, wherein the decimation filter includes a Cascaded Integrator-Comb.

7. The method according to any one of claims 1 to 6, wherein the sine multiplied signal and the cosine multiplied signal are obtained using a phase synchronization unit that includes a phase-locked loop.

8. The method according to claim 5, wherein
the high-order harmonic components include a component having a frequency $\Delta f$ and a component having a frequency ($2\Delta f - f_{Dop}$), where $\Delta f$ is a difference between a frequency of the first light and a frequency of the second light, which are emitted from the light source and have the different frequencies, and $f_{Dop}$ is a frequency of a Doppler shift.

9. A measurement apparatus for measuring a shape or position of a surface (111a) to be measured using a measurement signal
said measurement apparatus comprising:

light emitting means for emitting a first light and a second light having different frequencies from a light source (101)
first detector means (105) for detecting a reference signal ($I_{ref}(t)$) based on interfering light of a component of the first light which is not incident on a reference surface and a component of the second light which is not incident on the surface to be measured;
second detector means (114) for detecting the measurement signal ($I_{sig}(x, y, t)$) based on an interfering light of reference light of the first light reflected by the reference surface (108a) and test light of the second light reflected by the surface to be measured, the measurement signal including an error component which does not depend on an optical path length difference between the test light and the reference light; and
processing means (115) for obtaining the shape or the position of the surface to be measured based on the reference signal and the measurement signal by,
generating a sine signal and a cosine signal, which are in synchronization with the reference signal, and obtaining a sine multiplied signal and a cosine multiplied signal of the measurement signal by multiplying the measurement signal by the generated sine signal and the generated cosine signal,
correcting the sine multiplied signal and the cosine multiplied signal by a sine signal and a cosine signal of the error component,
obtaining a phase ($\phi(x, y, t)$) corresponding to the optical path length difference by calculating an arctangent of the corrected sine multiplied signal and the corrected cosine multiplied signal, and
obtaining the shape or the position of the surface to be measured using the obtained phase.

F I G. 1

EP 2 738 514 A1

# FIG. 2

# FIG. 3

# FIG. 4

EP 2 738 514 A1

# FIG. 5

# FIG. 6

# FIG. 7

EP 2 738 514 A1

EP 2 738 514 A1

115

801

DATA ANALYSIS_Sin

OPPOSITE PHASE SIGNAL GENERATION_Sin

**804**

**806**

802

808

208

LENGTH MEASUREMENT VALUE CALCULATION

204

206

ADC_Sig

CIC_Sin

DATA ACQUISITION_Sin

DATA CORRECTION_Sin

tan⁻¹

**209**

**210**

201

CIC_Cos

DATA ACQUISITION_Cos

DATA CORRECTION_Cos

ORDER CONNECTION

205

207

803

809

**805**

**807**

$\sin(2\pi\Delta ft)$

$\cos(2\pi\Delta ft)$

ADC_Ref

PLL

202

203

DATA ANALYSIS_Cos

OPPOSITE PHASE SIGNAL GENERATION_Cos

114

105

EP 2 738 514 A1

# F I G. 9

21

**Europäisches Patentamt**
**European Patent Office**
**Office européen des brevets**

## EUROPEAN SEARCH REPORT

Application Number

EP 13 19 5111

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/166118 A1 (DEMAREST FRANK C [US] ET AL) 28 July 2005 (2005-07-28) <br> * abstract; figures 1a,1b, 2, 3 * <br> * paragraph [0085] - paragraphs [0173], [0205] * <br> * paragraph [0244] - paragraph [0256] * <br> ----- | 1-9 | INV. <br> G01B9/02 |
| A | US 2012/147382 A1 (OKADA YOSHIYUKI [JP]) 14 June 2012 (2012-06-14) <br> * the whole document * <br> ----- | 1-9 | |
| A,P | EP 2 648 044 A2 (CANON KK [JP]) 9 October 2013 (2013-10-09) <br> * the whole document * <br> ----- | 1-9 | |
| A,P | EP 2 623 924 A1 (CANON KK [JP]) 7 August 2013 (2013-08-07) <br> * the whole document * <br> ----- | 1-9 | |
| | | | TECHNICAL FIELDS SEARCHED (IPC) <br><br> G01B |

The present search report has been drawn up for all claims

| Place of search | Date of completion of the search | Examiner |
|---|---|---|
| Munich | 21 February 2014 | Stanciu, C |

EPO FORM 1503 03.82 (P04C01)

# EP 2 738 514 A1

## ANNEX TO THE EUROPEAN SEARCH REPORT
## ON EUROPEAN PATENT APPLICATION NO.

EP 13 19 5111

21-02-2014

| Patent document cited in search report | | | Publication date | Patent family member(s) | | | Publication date |
|---|---|---|---|---|---|---|---|
| US 2005166118 | A1 | | 28-07-2005 | JP | 4918487 | B2 | 18-04-2012 |
| | | | | JP | 2008510170 | A | 03-04-2008 |
| | | | | US | 2005166118 | A1 | 28-07-2005 |
| | | | | WO | 2006023489 | A2 | 02-03-2006 |
| US 2012147382 | A1 | | 14-06-2012 | JP | 2012122850 | A | 28-06-2012 |
| | | | | US | 2012147382 | A1 | 14-06-2012 |
| EP 2648044 | A2 | | 09-10-2013 | EP | 2648044 | A2 | 09-10-2013 |
| | | | | JP | 2013217670 | A | 24-10-2013 |
| | | | | US | 2013268225 | A1 | 10-10-2013 |
| EP 2623924 | A1 | | 07-08-2013 | EP | 2623924 | A1 | 07-08-2013 |
| | | | | JP | 2013160543 | A | 19-08-2013 |
| | | | | US | 2013204576 | A1 | 08-08-2013 |

EPO FORM P0459

**EP 2 738 514 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008510170 A